# FASCICULE DE BREVET EUROPEEN

(11) **EP 3 640 146 B1**
(45) Date de publication et mention de la délivrance du brevet: **05.05.2021**
(21) Numéro de dépôt: 19203035.1
(22) Date de dépôt: 14.10.2019
(51) Int. Cl.: B64G 1/22

(54) **DISPOSITIF DEPLOYABLE A METRE-RUBANS**
ENTFALTBARE VORRICHTUNG MIT MASSBÄNDERN
DEPLOYABLE DEVICE WITH TAPE MEASURE

(30) Priorité: 18.10.2018 FR 1801095
(43) Date de publication de la demande: 22.04.2020
(73) Titulaire: Thales, 92400 Courbevoie (FR)
(72) Inventeur: BAUDASSÉ, Yannick, 06156 Cannes La Bocca Cedex (FR); FRANCOIS, Xavier, 06156 Cannes La Bocca Cedex (FR); GUINOT, François, 06156 Cannes La Bocca Cedex (FR); BOUCHET, Valentin, 06156 Cannes La Bocca Cedex (FR)
(74) Mandataire: Marks & Clerk France

(56) Documents cités:
- EP-A1- 2 354 006
- EP-A1- 3 023 333
- EP-A2- 0 319 921
- WO-A1-2011/065621
- WO-A1-2015/153824
- CN-A- 103 224 037
- CN-A- 106 864 772
- US-A1- 2016 311 558
- US-A1- 2017 158 357

## Description

La présente invention concerne undispositif déployableà mètre-rubans. Elle s'applique notamment au domaine des équipements spatiaux qui doivent être déployés en orbite et plus particulièrement aux équipements spatiaux pour satellites, tels que des antennes, des générateurs solaires, des instruments. Toutefois, l'invention s'applique à tout autre domaine dans lequel il est souhaitable d'éloigner un objet d'une structure porteuse.

Dans le domaine spatial, les mètre-rubans sont fréquemment utilisés dans le déploiement. En position stockée (ou enroulée), les mètre-rubans sont enroulés autour d'un mandrin. Le déploiement des mètre-rubans est assuré de manière autonome par leur déroulement spontané lorsque le mandrin est libre en rotation. Les mètre-rubans sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Il existe différents types de ruban ayant des propriétés propres. Les rubans monostables possèdent une position naturelle déployée et nécessitent un maintien en position stockée.Les mètre-rubansmonostables ont donc une tendance naturelle à se déployer pour se retrouver dans leur état déroulé. Le déploiement des rubans monostables est souvent anarchique et incontrôlé.Les rubans bistables possèdent deux positions naturelles (position enroulée et position déployée) et ne nécessitent pas de maintien en position enroulée lorsque la section est totalement aplatie. Leur déploiement est linéaire et contrôlé.

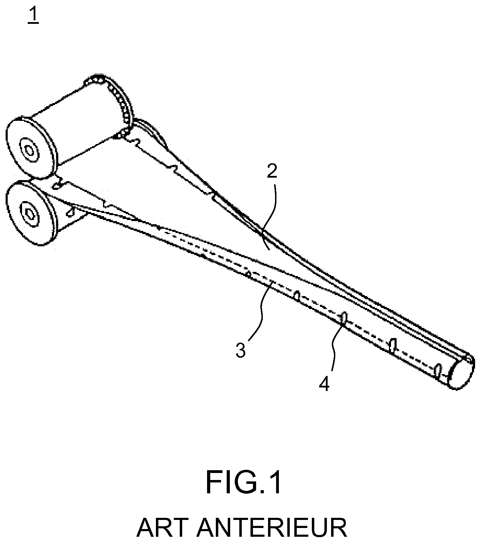

Lorsque l'on souhaite éloigner l'objet de la structure porteuse, par exemple pour positionner un objet, il faut que les mètre-rubans assurent le maintien de l'objet en configuration enroulée et la rigidité de l'ensemble pendant le déploiement. Or, les mètre-rubans n'ont pas la même raideur suivant l'axe de contrainte. Un effort F appliqué sur la face convexe du mètre-ruban va avoir tendance à faire fléchir le mètre-ruban alors que le même effort appliqué sur la face concave n'aura aucun effet, ce qui pose un problème d'instabilité de la structure flexible dans son état déployé. Pour résoudre ce problème de stabilité de l'état déployé, il est connu d'utiliser deux mètre-rubans comme représenté à la Figure 1. Il s'agit d'un dispositif 1 appelé bi-STEM (STEM étant l'abréviation du terme anglo-saxon « StorableTubularExtendibleMember ») dans lequel deux mètre-rubans 2, 3 sont enroulés de manière opposée en configuration enroulée et s'emboîtent l'un dans l'autre en configuration déployée pour obtenir une rigidité accrue par rapport à l'utilisation d'un seul mètre-ruban. Cependant ce système nécessite des agrafes 4 pour fixer les mètre-rubans 2, 3 entre eux. Ces agrafes sont intégrées aux rubans et les fragilisent. Il en résulte un risque de générer des amorces de rupture préjudiciable au bon fonctionnement du dispositif de déploiement. Alternativement, ce système peut comporter des ancrages usinés dans un des deux mètre-rubans et le deuxième mètre-ruban comporte des portions qui viennent se positionner dans ces ancrages. Là encore, l'usinage des mètre-rubans génère des efforts qui peuvent créer des fissures sur les mètre-rubans. De plus, ces deux alternatives nécessitent une conception complexe des mètre-rubans. Enfin, ces modes de réalisation impliquent l'existence de jeux entre les deux mètre-rubans, préjudiciables dans le positionnement de l'objet.

Le document EP 2 354 006 décrit un dispositif déployable de mètre-rubans avec des attaches de surface 30 entre deux mètre-rubans. La surface de contact ainsi définie entre deux mètre-rubans est positionnée entre deux portions de face concave des mètre-rubans. Une sollicitation en torsion du mât ainsi formé par liaison des deux mètre-rubans entraîne des chargements combinés avec risque de décollement des éléments adhérents du fait du positionnement radial et de l'amplitude du mouvement (sollicitations hors du plan). Il en est de même pour les sollicitations du mât en flexion. Cette solution est moins performante à masse équivalente.

L'invention vise à pallier tout ou partie des problèmes cités plus haut en proposant un dispositif déployable présentant l'avantage d'être peu encombrant, simple à réaliser, présentant une optimisation du volume et de la masse de l'ensemble, permettant le maintien de l'objet à éloigner de la structure porteuse en configuration enroulée et assurant la rigidité de l'ensemble pendant la phase de déploiement et en configuration déployée.

A cet effet, l'invention a pour objet undispositif déployable comprenant :
- plusieurs rouleaux de stockage mobiles en rotation chacun autour d'un premier axe Zi,
- plusieurs mètre-rubans, chacun étant apte à passer d'une configuration enroulée dans un des rouleaux de stockage à une configuration déployée selon un deuxième axe Xi sensiblement perpendiculaire au premier axe Zi du rouleau de stockage associé et présentant une face sensiblement concave et une face sensiblement convexe, les faces concaves des mètre-rubans étant en vis-à-vis, les mètres-rubans étant au moins partiellement superposés deux à deux sur une surface de contact,
et une liaison adhérente réversible sur la surface de contact entre au moins deux des mètre-rubans en configuration déployée, la surface de contact étant positionnée entre la face concave d'un premier parmi les mètre-rubans et la face convexe d'un second parmi les mètre-rubans..

Selon un mode de réalisation, la liaison adhérente réversible comprend des protubérances sur un mètre-ruban et des boucles de fil sur un autre mètre ruban.

Selon un autre mode de réalisation, la liaison adhérente réversible comprend une pluralité de cils adhérents par des forces de Van der Waals, préférentiellement des sétules, et encore préférentiellement des sétules comprenant des spatules en leur extrémité.

La liaison adhérente réversible sur la surface de contact peut être ponctuelle ou linéaire.

Avantageusement, chacun de la pluralité de mètres-rubans ayant une extrémité libre, les extrémités libres de la pluralité de mètre-rubans sont liées rigidement entre elles en configuration déployée.

Avantageusement, au moins un mètre-ruban de la pluralité de mètre-rubans a une épaisseur non constante selon un axe Yi sensiblement perpendiculaire à l'axe Xi et l'axe Zi, préférentiellement d'épaisseur décroissante vers l'extrémité libre, et/ou une largeur non constante selon l'axe Zi, préférentiellement de largeur décroissante vers l'extrémité libre.

Avantageusement, le dispositif déployablecomprend un moteur d'entraînement en rotation configuré pour entraîner la pluralité de rouleaux de stockage.

Selon un autre mode de réalisation, le dispositif déployable comprend au moins deux galets positionnés au plus près d'un des rouleaux de stockage, les galets étant en contact avec le mètre-ruban enroulé dans ledit rouleau de stockage et les galets sont aptes à maintenir le mètre-ruban en configuration enroulée d'une part des galets et en configuration déployée d'autre part des galets.

Avantageusement, le dispositif déployable selon l'invention comprend une ligne électrique positionnée sur une surface d'au moins un mètre-ruban et/ou sur un rouleau additionnel co-enroulé dans un rouleau de stockage et/ou sur un rouleau annexe.

Avantageusement,les mètre-rubans au moins partiellement superposés deux à deux sur la surface de contact forment un tube creux, et le dispositif déployable comprend en outre un câble, préférentiellement électrique ou mécanique, positionné dans le tube creux.

L'invention concerne aussi un satellite comprenant au moins un dispositif déployabletel que précédemment décrit.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un dispositif déployable de type bi-STEM selon l'art antérieur,
- les figures 2A, 2B, 2C représentent chacune un dispositif déployable,
- la figure 3 représente un dispositif déployable selon l'invention selon une vue en coupe du dispositif déployable au niveau de ses deux mètre-rubans,
- les figures 4A, 4B, 4C représentent chacune une vue en coupe d'un exemple dit « cylindrique » d'un dispositif déployable au niveau de ses mètre-rubans, la figure 4A étant un mode de réalisation de l'invention,
- les figures 5A, 5B, 5C représentent chacune une vue en coupe d'un exemple dit « oméga » d'un dispositif déployable au niveau de ses mètre-rubans,
- les figures 6A, 6B, 6C représentent chacune une vue en coupe d'un exemple dit « en U » ou « ovoïde » d'un dispositif déployable au niveau de ses mètre-rubans, la figure 6A étant un mode de réalisation de l'invention,
- la figure 7 représente un mode de réalisation d'un dispositif déployable selon l'invention en configuration enroulée et en configuration déployée,
- la figure 8 représente un mode de réalisation d'un dispositif déployable selon l'invention en configuration enroulée et maintenant un objet en configuration stockée,
- la figure 9 représente un autre mode de réalisation d'un dispositif déployable avec câble selon l'invention,
- la figure 10 représente schématiquement un satellite comprenant au moins undispositif déployable selon l'invention.

Par souci de clarté, les mêmes éléments porteront les mêmes repères dans les différentes figures.

L'invention s'applique à des mètre-rubans monostables ou bistables. La mise en œuvre de mètre-rubans monostables demande un effort de guidage plus important. Les mètre-rubans bistables sont préférés pour l'homogénéité de leur déploiement. De plus, en configuration enroulée, ils restent enroulés et en configuration déployée, ils restent déployés.

La **figure 1** représente un dispositif déployable 1 de type bi-STEM selon l'art antérieur et a déjà été décrite dans l'introduction.

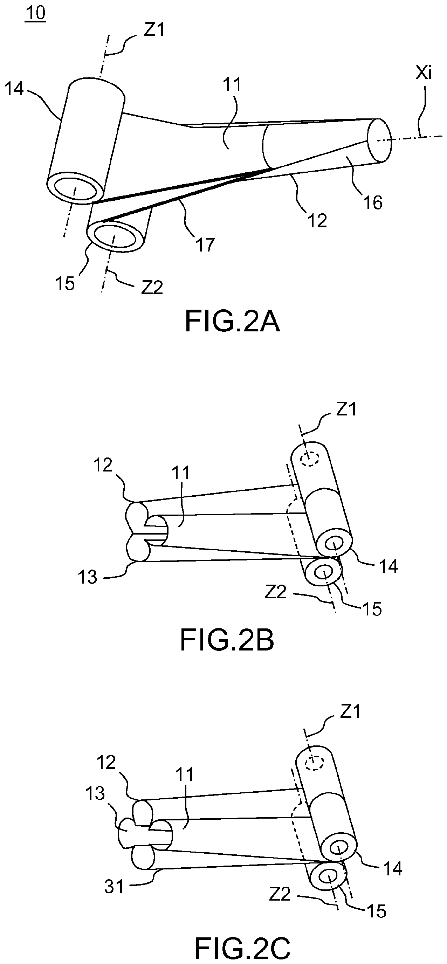

Les **figures 2A, 2B et 2C** représentent chacune un dispositif déployable 10. Sur la figure 2A, le dispositif déployable 10 comprend plusieurs rouleaux de stockage mobiles en rotation chacun autour d'un axe Zi. Ici, deux rouleaux de stockage 14, 15 sont considérés, ils sont mobiles en rotation respectivement autour des axe Z1 et Z2 (pouvant être noté plus généralement Zi, i prenant une valeur allant de 2 à un nombre entier égal au nombre de rouleaux de stockage et de mètre-rubans du dispositif 10). Comme explicité plus loin dans la description, le dispositif peut comprendre trois rouleaux de stockage comme représenté sur la figure 2B, ils peuvent être dans ce cas mobiles en rotation respectivement autour d'axes Z1, Z2, Z3. Dans le cas de quatre rouleaux de stockage comme représenté sur la figure 2C, il y peut alors y avoir quatre axes de rotation Z1, Z2, Z3, Z4, etc.

Il est également possible, dans le cas d'un nombre multiple de mètre-rubans (11, 12, 13, 31), d'enrouler plusieurs d'entre eux sur un même mandrin (14, 15) dans un but de gain de place et/ou de masse. C'est cette configuration qui est représentée sur les figures 2B et 2C avec deux axes de rotation Z1 et Z2 pour deux mandrins 14, 15 dans le cas de trois ou quatre mètre-rubans.

Le dispositif déployable 10 comprend plusieurs mètre-rubans, ici deux mètre-rubans 11, 12, chacun étant apte à passer d'une configuration enroulée dans un des rouleaux de stockage 14, 15 à une configuration déployée selon un axe Xi sensiblement perpendiculaire à l'axe Zi du rouleau de stockage 14, 15 associé (c'est-à-dire respectivement Z1, Z2) et présentant une face sensiblement concave et une face sensiblement convexe. Le dispositif peut comprendre trois, quatre mètre-rubans ou plus, chaque mètre-ruban étant enroulé dans un rouleau de stockage respectif. Autrement dit, les mètre-rubans sont enroulés individuellement dans un rouleau de stockage, d'enroulement opposé et enroulés vers l'extérieur.

Les faces concaves des mètre-rubans 11, 12 sont en vis-à-vis. En d'autres termes, les faces concaves des mètre-rubans se font face en position déployée, ou, lorsque les mètre-rubans ne sont pas totalement déployés, dans les portions déployées de mètre-rubans. Les mètres-rubans 11, 12 sont au moins partiellement superposés deux à deux sur une surface de contact 16. La surface de contact 16 est définie par la ou les portions où une partie d'un mètre-ruban chevauche une autre partie d'un autre mètre-ruban.

Le dispositif déployable 10 comprend une liaison adhérente réversible 17 sur la surface de contact 16 entre au moins deux des mètre-rubans 11, 12 en configuration déployée et la surface de contact 16 est positionnée entre la face concave d'un premier 11, 12 parmi les mètre-rubans 11, 12 et la face convexe d'un second 12, 11 parmi les mètre-rubans 11, 12. Liés avec la liaison adhérente réversible 17, les mètre-rubans 11, 12 forment un mât. Une sollicitation du mât en torsion entraîne un mouvement de glissement entre les mètre-rubans. Le matériau adhérent de la liaison 17 travaille alors en cisaillement sur la totalité de la surface de contact. Il en est de même pour les sollicitations du mât en flexion avec un cisaillement dans la direction longitudinale du mât. Autrement dit, le positionnement de la liaison adhérente réversible entre la face concave d'un mètre-ruban et la face convexe de l'autre mètre-ruban présente l'avantage d'une meilleure reprise des charges, avec une meilleure raideur que dans les liaisons connues de l'art antérieur : plus la surface sollicitée est importante, meilleures seront la reprise des charges et la raideur.

La liaison adhérente réversible 17 présente l'avantage d'être réversible, c'est-à-dire que les mètre-rubans 11, 12 peuvent être déployés et co-assemblés puis enroulés et de nouveau co-assemblés autant de cycles que souhaité. Il s'agit d'une liaison amovible. La liaison 17 est une liaison par adhérence, il n'y a donc pas de jeu entre les deux mètre-rubans une fois déployés et co-assemblés. Enfin cette liaison est simple et fiable puisqu'elle nécessite peu de composants. En outre, le co-assemblage fiable des mètre-rubans permet d'accroître la rigidité du dispositif pendant le déploiement et en configuration déployée.

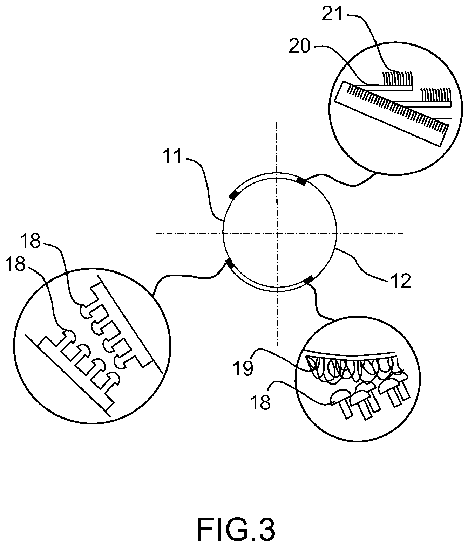

La **figure 3** représente un dispositif déployable selon l'invention selon une vue en coupe du dispositif déployable au niveau de ses deux mètre-rubans 11, 12, perpendiculairement à l'axe Xi. La liaison adhérente réversible 17 peut comprendre des protubérances 18 sur un mètre-ruban 12 et des boucles de fil 19 sur un autre mètre ruban 11. Il s'agit d'un principe de fixation mécanique par crochets et boucles (à noter que ces boucles peuvent être textiles ou pas, par exemple métalliques ou métallisées). Quand les mètre-rubans 11, 12 sont mis en contact au niveau de la surface de contact 16, les protubérances 18 s'accrochent dans les boucles 19 pour obtenir une liaison adhérente amovible 17 qui peut être défaite et refaite autant de fois que désiré.

La liaison adhérente réversible 17 peut également comprendre des protubérances 18 sur un mètre-ruban 12 et des protubérances 18 sur un autre mètre-ruban 11. Ces protubérances s'étendent selon un tronc sensiblement perpendiculairement à la surface du mètre-ruban sur lequel elles se trouvent. A l'extrémité libre du tronc se trouve un chapeau, donnant à la protubérance une forme de champignon. Lorsque les protubérances 18 des deux mètre-rubans sont mises en contact, chaque chapeau des protubérances d'un mètre-ruban s'insère entre deux chapeaux des protubérances de l'autre mètre-ruban créant ainsi la liaison réversible 17.

Ces protubérances peuvent être de taille microscopique, voire nanométrique.

La figure 3 représente également un autre type de liaison adhérente réversible 17. La liaison adhérente réversible 17 peut comprendre une pluralité de cils 20 adhérents par des forces de Van der Waals, préférentiellement des sétules 20, et encore préférentiellement des sétules 20 comprenant des spatules 21 en leur extrémité.

Les sétules 20 offrent une adhérence très élevée. Elles sont en forme de cheveux pouvant se ramifier en spatules 21. La taille des sétules et celle des spatules sont minuscules. Une sétule peut mesurer par exemple 100 micromètres de long et quelques micromètres de large. Chaque sétule peut contenir plusieurs centaines voire milliers de spatules mesurant quelques nanomètres de long et de large. Selon la densité des sétules et spatules, la liaison 17 peut comprendre des milliers de sétules par mm² et des millions de spatules pour faire adhérer deux faces de deux mètre-rubans.

Les cils peuvent avoir une composition en carbone, polymère, acrylique, ou bien être sous forme de filaments de silicium.La liaison adhérente réversible peut être aussi constituée d'un adhésif transfert acrylique collé sur un ruban texturé de silicone, ou encore en texturation en film de polyimide ou texturation avec des nanotubes de carbone.

La liaison adhérente réversible 17 sur la surface de contact 16 peut être ponctuelle ou linéaire. Elle peut se trouver sur les bords d'un ou plusieurs mètre-rubans, c'est-à-dire le long de la face d'un ou plusieurs mètre-rubans, en continu ou linéairement par morceaux ou ponctuellement. Elle peut également se trouver sur la face concave d'un mètre-ruban et/ou sur la face convexe de l'autre mètre-ruban, de sorte à ce que la face concave de l'un adhère à la face convexe de l'autre. Avec ce type de liaison, il se produit une cohérence intermoléculaire entre les cils sur un mètre-ruban et la surface de l'autre mètre-ruban. Cette liaison présente l'avantage de nécessiter le positionnement des cils sur une seule face pour faire adhérer deux faces entre elles.

On peut noter que le dispositif selon l'invention peut comprendre uniquement un seul type de liaison (soit protubérances/boucles, soit protubérances/protubérances, soit cils/matériaux lisses) ou bien une combinaison de ces types de liaison, par exemple protubérances/boucles à l'extrémité libre des mètre-rubans et des cils au-delà d'un certain déploiement des mètre-rubans.

L'invention présente en outre l'avantage de garantir une très bonne raideur aux mètre-rubans. En effet, une fois le dispositif déployé, les mètre-rubans 11, 12 au moins partiellement superposés deux à deux sur la surface de contact 16 forment un tube creux 52. Ce tube 52 est sollicité en flexion. Toutefois, grâce à la liaison adhérente 17, le dispositif 10 conserve ses propriétés de mètre-rubans sur toute la section. Il n'y a pas besoin de renforcer les mètre-rubans localement. L'épaisseur des mètre-rubans peut donc rester fine, ce qui permet aussi de maintenir un certain niveau de compacité de l'enroulement au niveau des rouleaux de stockage.

Par ailleurs, au moins un mètre-ruban 11, 12 peut avoir une épaisseur non constante selon un axe Yi sensiblement perpendiculaire à l'axe Xi et à l'axe Zi, préférentiellement d'épaisseur décroissante vers l'extrémité libre 22, et/ou une largeur non constante selon l'axe Zi, préférentiellement de largeur décroissante vers l'extrémité libre 22. L'évolution de la section du mètre-ruban dans sa largeur ou dans son épaisseur permet d'adapter la rigidité de l'ensemble mais aussi de faire un gain en termes de masse totale.

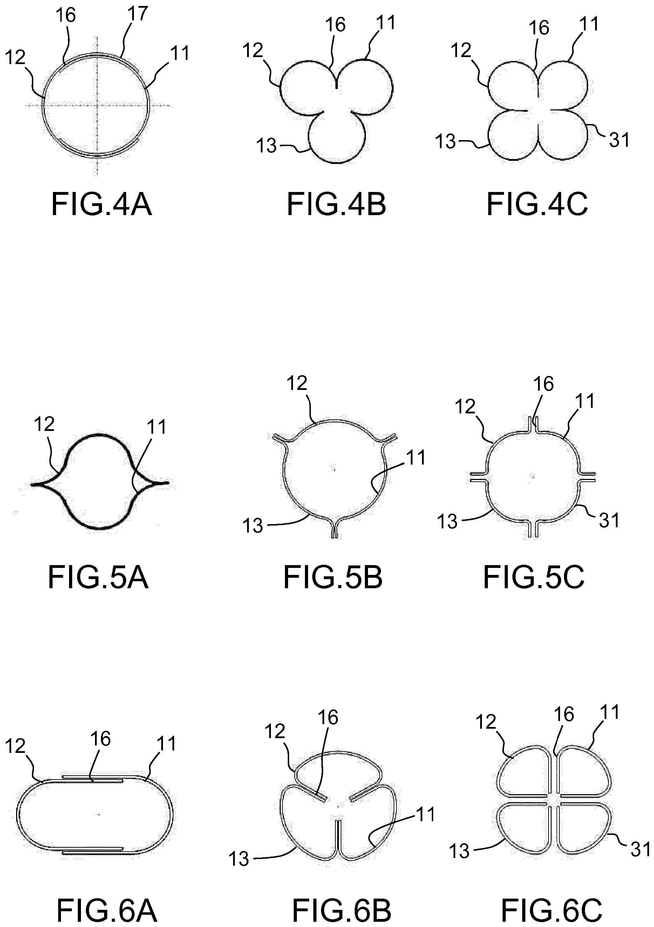

Les **figures 4A, 4B, 4C** représentent chacune une vue en coupe d'un exemple dit « cylindrique » d'un dispositif déployable au niveau de ses mètre-rubans, perpendiculairement à l'axe Xi. La figure 4A représente un mode de réalisation de l'invention. Les figures 4B et 4C représentent des exemples non revendiqués mais leur description contribue à la bonne compréhension de l'invention. La figure 4A est similaire à la figure 3 présentée précédemment. Dans le mode de réalisation de la figure 4A, la liaison adhérente réversible 17 se trouve sur toute la surface de contact 16 entre les deux mètre-rubans 11, 12.

La figure 4B représente un exemple dans lequel le dispositif déployable comprend trois mètre-rubans 11, 12, 13. Il y a trois surfaces de contact 16 : entre les mètre-rubans 11, 12 et 12, 13 et 13, 11.

La figure 4C représente un exemple dans lequel le dispositif déployable comprend quatre mètre-rubans 11, 12, 13, 31. Il y a quatre surfaces de contact 16 : entre les mètre-rubans 11, 12 et 12, 13 et 13, 31 et 31, 11.

Sur le même principe, un dispositif déployable selon l'invention peut comprendre plus de quatre mètre-rubans.

Les **figures 5A, 5B, 5C** représentent chacune une vue en coupe d'un exemple dit « oméga » d'un dispositif déployable au niveau de ses mètre-rubans, perpendiculairement à l'axe Xi. Ces exemples ne sont pas revendiqués mais leur description contribue à la bonne compréhension de l'invention. Dans les exemples représentés, lessurfaces de contact sont sur les faces concaves des mètre-rubans, au niveau de leurs bordures. Comme expliqué précédemment, la liaison adhérente réversible 17 peut être positionnée sur la totalité des surfaces de contact ou bien sur une partie seulement, de façon surfacique ou bien ponctuelle.

Les **figures 6A, 6B, 6C** représentent chacune une vue en coupe d'un exemple dit « en U » ou « ovoïde » d'un dispositif déployable au niveau de ses mètre-rubans, perpendiculairement à l'axe Xi. La figure 6A représente un mode de réalisation de l'invention. Les figures 6B et 6C représentent des exemples non revendiqués mais leur description contribue à la bonne compréhension de l'invention. Dans les exemples représentés, les surfaces de contact sont sur les faces convexes des mètre-rubans, du côté extérieur, c'est-à-dire du côté opposé à celui où les faces concaves sont en vis-à-vis. Comme expliqué précédemment, la liaison adhérente réversible 17 peut être positionnée sur la totalité des surfaces de contact ou bien sur une partie seulement, de façon surfacique ou bien ponctuelle.

Le choix du nombre de mètre-rubans dans le dispositif déployable selon l'invention dépend de l'application qui est en faite. Un tube de plus grande section présentera une meilleure rigidité en configuration déployée. Dans ce cas, il peut être judicieux d'utiliser plus de deux mètre-rubans. Pour des sollicitations en torsion ou flexion, la configuration cylindrique des mètre-rubans est la plus prometteuse.

Le choix du nombre de mètre-rubans dépend également de la contrainte d'encombrement au niveau de l'emplanture.

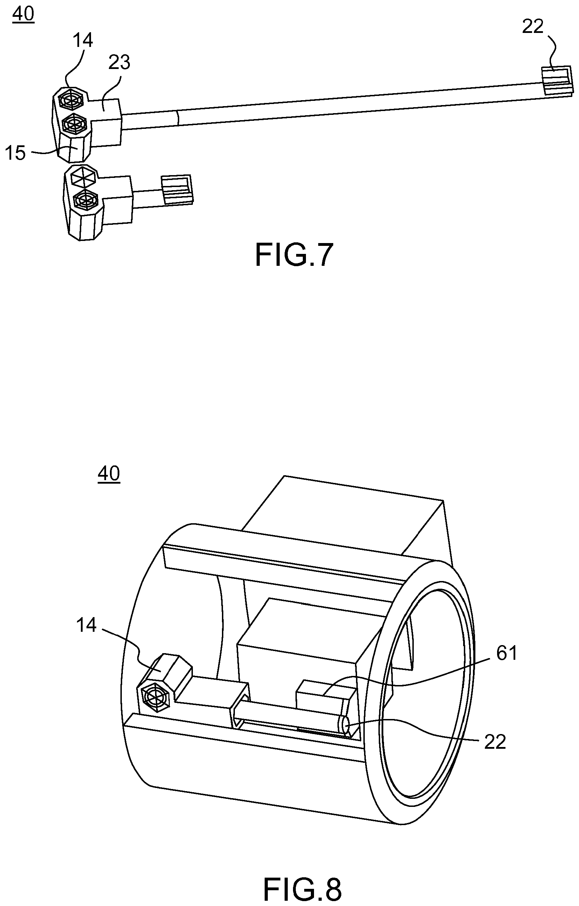

La **figure 7** représente un mode de réalisation d'un dispositif déployable selon l'invention en configuration enroulée et en configuration déployée.Chacun des mètres-rubans 11, 12 a une extrémité libre 22. Les extrémités libres 22 des mètre-rubans 11, 12 sont liées rigidement entre elles en configuration déployée.

Le dispositif déployable 40 comprend un moteur d'entraînement 23 en rotation configuré pour entraîner les rouleaux de stockage 14, 15. Le fait que les rouleaux de stockage sont en contact co-motorisé permet de n'avoir qu'un seul moteur pour le déploiement de deux (ou plus) mètre-rubans.

La **figure 8** représente un mode de réalisation d'un dispositif déployable 40 selon l'invention en configuration enroulée et maintenant un objet 61 en configuration stockée. L'objet peut ainsi être maintenu, notamment lors de la phase de lancement d'un satellite. Ultérieurement, cet objet peut être libéré (par un mécanisme non-représenté), et le dispositif déployable 40 peut alors passer de la configuration enroulée à la configuration déployée pour éloigner l'objet 61 de la structure porteuse.

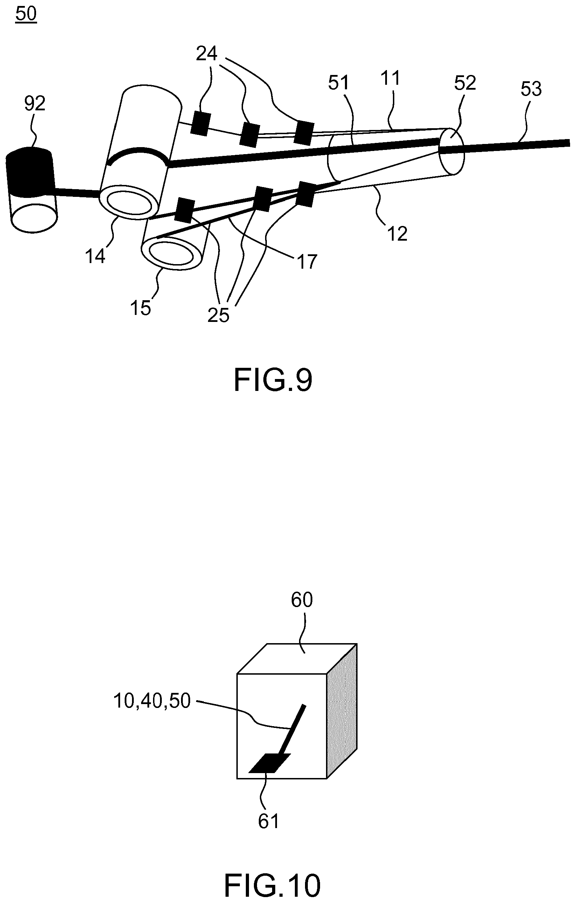

La **figure 9** représente un autre mode de réalisation d'un dispositif déployable 50 avec câble selon l'invention.

Le dispositif déployable 50 peut aussi comprendre au moins deux galets 24, 25 positionnés au plus près d'un des rouleaux de stockage 14, les galets 24, 25 étant en contact avec le mètre-ruban 11 enroulé dans ledit rouleau de stockage 14. Les galets 24, 25 sont aptes à maintenir le mètre-ruban 11 en configuration enroulée d'une part des galets et en configuration déployée d'autre part des galets 24, 25. Sur la figure 9, six galets sont représentés (trois de part et d'autre des mètre-rubans). Il est tout à fait envisageable d'en positionner plus, par exemple une dizaine.

Il est aussi possible de prévoir un galet fixe central pour précontraindre les rouleaux de stockage flottants.

Sur le mode de réalisation représenté à la figure 9, le dispositif déployable 50 comprend une ligne électrique 51 positionnée sur une surface d'un mètre-ruban 11. La ligne électrique sur le mètre-ruban 11 permet d'amener de l'énergie en bout de dispositif déployable. Dans ce cas, il est possible de prévoir un collecteur électrique dans le guidage des mètre-rubans. La ligne électrique 51 peut aussi être sur un rouleau additionnel co-enroulé dans un rouleau de stockage et/ou sur un rouleau annexe avec des torons de câbles.

Selon un autre mode de réalisation du dispositif déployable 50, les mètre-rubans 11, 12 au moins partiellement superposés deux à deux sur la surface de contact 16 forment un tube creux 52. Le dispositif déployable 50 peut comprendre en outre un câble 53, préférentiellement électrique ou mécanique, positionné dans le tube creux 52. En plus de pouvoir éloigner un objet 61 de la structure porteuse, le dispositif déployable 50 permet aussi de mettre à disposition un câble électrique ou mécanique (par exemple pour tracter un satellite) en bout du dispositif 50, même en configuration déployée.

La **figure 10** représente schématiquement un satellite 60 comprenant au moins un dispositif déployable selon l'invention et permettant d'éloigner un objet 61 de la structure porteuse du satellite 60.

## Revendications

1. Dispositif déployable (10, 40, 50) comprenant :
• plusieurs rouleaux de stockage (14, 15) mobiles en rotation chacun autour d'un premier axe Zi,
• plusieurs mètre-rubans (11, 12, 13, 31), chacun étant apte à passer d'une configuration enroulée dans un des rouleaux de stockage (14, 15) à une configuration déployée selon un deuxième axe Xi sensiblement perpendiculaire au premier axe Zi du rouleau de stockage (14, 15) associé et présentant une face sensiblement concave et une face sensiblement convexe, les faces concaves des mètre-rubans (11, 12, 13, 31) étant en vis-à-vis, les mètres-rubans (11, 12, 13, 31) étant au moins partiellement superposés deux à deux sur une surface de contact (16),
• une liaison adhérente réversible (17) sur la surface de contact (16) entre au moins deux des mètre-rubans (11, 12, 13, 31) en configuration déployée,
**caractérisé en ce que** la surface de contact (16) est positionnée entre la face concave d'un premier (11, 12, 13, 31) parmi les mètre-rubans (11, 12, 13, 31) et la face convexe d'un second (12, 11, 13, 31) parmi les mètre-rubans (11, 12, 13, 31).

2. Dispositif déployable (10, 40, 50) selon la revendication 1, **caractérisé en ce que** la liaison adhérente réversible (17) comprend des protubérances (18) sur un mètre-ruban (11, 12) et des boucles de fil (19) sur un autre mètre ruban (12, 11).

3. Dispositif déployable (10, 40, 50), selon la revendication 1, **caractérisé en ce que** la liaison adhérente réversible (17) comprend une pluralité de cils (20) adhérents par des forces de Van der Waals, préférentiellement des sétules (20), et encore préférentiellement des sétules(20) comprenant des spatules (21) en leur extrémité.

4. Dispositif déployable (10, 40, 50) selon l'une des revendications précédentes, **caractérisé en ce que** la liaison adhérente réversible (17) sur la surface de contact (16) est ponctuelle ou linéaire.

5. Dispositif déployable (10, 40, 50) selon l'une des revendications précédentes, chacun de la pluralité de mètres-rubans (11,12) ayant une extrémité libre (22), **caractérisé en ce que** les extrémités libres (22) de la pluralité de mètre-rubans (11, 12) sont liées rigidement entre elles en configuration déployée.

6. Dispositif déployable (10, 40, 50) selon l'une des revendications précédentes, chacun de la pluralité de mètres-rubans (11,12) ayant une extrémité libre (22), **caractérisé en ce qu'**au moins un mètre-ruban (11, 12) de la pluralité de mètre-rubans (11, 12) a une épaisseur non constante selon un troisième axe Yi sensiblement perpendiculaire au deuxième axe Xi et au premier axe Zi, préférentiellement d'épaisseur décroissante vers l'extrémité libre (22), et/ou une largeur non constante selon le premier axe Zi, préférentiellement de largeur décroissante vers l'extrémité libre (22).

7. Dispositif déployable (10, 40, 50) selon l'une des revendications précédentes, **caractérisé en ce qu'**il comprend un moteur d'entraînement (23) en rotation configuré pour entraîner la pluralité de rouleaux de stockage (14, 15).

8. Dispositif déployable (50) selon l'une des revendications précédentes, **caractérisé en ce qu'**il comprend au moins deux galets (24, 25) positionnés au plus près d'un des rouleaux de stockage (14, 15), les galets (24, 25) étant en contact avec le mètre-ruban (11, 12) enroulé dans ledit rouleau de stockage (14, 15) et **en ce que** les galets (24, 25) sont aptes à maintenir le mètre-ruban (11, 12) en configuration enroulée d'une part des galets et en configuration déployée d'autre part des galets (24, 25).

9. Dispositif déployable (50) selon l'une des revendications précédentes, **caractérisé en ce qu'**il comprend une ligne électrique (51) positionnée sur une surface d'au moins un mètre-ruban (11, 12) et/ou sur un rouleau additionnel co-enroulé dans un rouleau de stockage et/ou sur un rouleau annexe.

10. Dispositif déployable (50) selon l'une des revendications précédentes, **caractérisé en ce que** les mètre-rubans (11, 12) au moins partiellement superposés deux à deux sur la surface de contact (16) forment un tube creux (52), et **en ce que** le dispositif déployable(50) comprend en outre un câble (53), préférentiellement électrique ou mécanique, positionné dans le tube creux (52).

11. Satellite (60) **caractérisé en ce qu'**il comprend au moins undispositif déployable(10, 40, 50) selon l'une des revendications précédentes.

## Patentansprüche

1. Entfaltbare Vorrichtung (10, 40, 50), Folgendes umfassend:
• mehrere Lagerungswalzen (14, 15), welche jeweils drehbar um eine erste Achse Zi beweglich sind,
• mehrere Maßbänder (11, 12, 13, 31), wobei jedes in der Lage ist, von einer eingerollten Konfiguration in einer der Lagerungswalzen (14, 15) zu einer entfalteten Konfiguration entlang einer zweiten Achse Xi überzugehen, welche im Wesentlichen rechtwinklig zur ersten Achse Zi der zugeordneten Lagerungswalze (14, 15) ist und welche eine im Wesentlichen konkave Seite und eine im Wesentlichen konvexe Seite aufweist, wobei die konkaven Seiten der Maßbänder (11, 12, 13, 31) einander zugewandt sind, wobei die Maßbänder (11, 12, 13, 31) einander mindestens teilweise paarweise auf einer Kontaktfläche (16) überlagern,
• eine reversible Haftverbindung (17) auf der Kontaktfläche (16) zwischen mindestens zwei der Maßbänder (11, 12, 13, 31) in entfalteter Konfiguration,
**dadurch gekennzeichnet, dass** die Kontaktfläche (16) zwischen der konkaven Seite eines ersten (11, 12, 13, 31) der Maßbänder (11, 12, 13, 31) und der konvexen Seite eines zweiten (12, 11, 13, 31) der Maßbänder (11, 12, 13, 31) positioniert ist.

2. Entfaltbare Vorrichtung (10, 40, 50) nach Anspruch 1, **dadurch gekennzeichnet, dass** die reversible Haftverbindung (17) Vorsprünge (18) auf einem Maßband (11, 12) und Bandschlaufen (19) auf einem anderen Maßband (12, 11) umfasst.

3. Entfaltbare Vorrichtung (10, 40, 50) nach Anspruch 1, **dadurch gekennzeichnet, dass** die reversible Haftverbindung (17) eine Vielzahl von durch Van der Waals-Kräfte haftenden Härchen (20) aufweist, vorzugsweise Setulae (20), und noch bevorzugter Weise Setulae (20), welche an ihren Enden Spatulae (21) umfassen.

4. Entfaltbare Vorrichtung (10, 40, 50) nach einem der vorhergehenden Ansprüche, **dadurch gekennzeichnet, dass** die reversible Haftverbindung (17) auf der Kontaktfläche (16) punktuell oder linear ist.

5. Entfaltbare Vorrichtung (10, 40, 50) nach einem der vorhergehenden Ansprüche, wobei jedes der Vielzahl von Maßbändern (11,12) ein freies Ende (22) aufweist, **dadurch gekennzeichnet, dass** die freien Enden (22) der Vielzahl von Maßbändern (11, 12) starr miteinander in entfalteter Konfiguration verbunden sind.

6. Entfaltbare Vorrichtung (10, 40, 50) nach einem der vorhergehenden Ansprüche, wobei jedes der Vielzahl von Maßbändern (11,12) ein freies Ende (22) aufweist, **dadurch gekennzeichnet, dass** mindestens ein Maßband (11, 12) der Vielzahl von Maßbändern (11, 12) eine nicht konstante Dicke entlang einer dritten Achse Yi aufweist, welche im Wesentlichen rechtwinklig zur zweiten Achse Xi und zur ersten Achse Zi ist, vorzugsweise mit einer in Richtung des freien Endes (22) abnehmenden Dicke, und/oder eine nicht konstante Breite entlang derer ersten Achse Zi aufweist, vorzugsweise mit einer in Richtung des freien Endes (22) abnehmenden Breite.

7. Entfaltbare Vorrichtung (10, 40, 50) nach einem der vorhergehenden Ansprüche, **dadurch gekennzeichnet, dass** sie einen Dreh-Antriebsmotor (23) umfasst, welcher konfiguriert ist, um die Vielzahl von Lagerungswalzen (14, 15) anzutreiben.

8. Entfaltbare Vorrichtung (50) nach einem der vorhergehenden Ansprüche, **dadurch gekennzeichnet, dass** sie mindestens zwei Rollen (24, 25) umfasst, welche so nah wie möglich an einer der Lagerungswalzen (14, 15) positioniert sind, wobei die Rollen (24, 25) in Kontakt mit dem Maßband (11, 12) stehen, welches in der Lagerungsrolle (14, 15) aufgerollt ist und dadurch, dass die Rollen (24, 25) in der Lage sind, das Maßband (11, 12) in aufgerollter Konfiguration einerseits der Rollen und in entfalteter Konfiguration andererseits der Rollen (24, 25) zu halten.

9. Entfaltbare Vorrichtung (50) nach einem der vorhergehenden Ansprüche, **dadurch gekennzeichnet, dass** sie eine elektrische Leitung (51) umfasst, welche auf einer Fläche mindestens eines Maßbandes (11, 12) und/oder auf einer zusätzlichen Walze positioniert ist, welche in einer Lagerungswalze und/oder auf einer Nebenwalze mit aufgerollt ist.

10. Entfaltbare Vorrichtung (50) nach einem der vorhergehenden Ansprüche, **dadurch gekennzeichnet, dass** die jeweils paarweise mindestens teilweise auf der Kontaktfläche (16) überlagerten Maßbänder (11, 12) eine hohle Röhre (52) bilden, und dadurch, dass die entfaltbare Vorrichtung (50) ferner ein vorzugsweise elektrisches oder mechanisches Kabel (53) umfasst, welches in der hohlen Röhre (52) positioniert ist.

11. Satellit (60), **dadurch gekennzeichnet, dass** er mindestens eine entfaltbare Vorrichtung (10, 40, 50) nach einem der vorhergehenden Ansprüche umfasst.

## Claims

1. Deployable device (10, 40, 50) comprising:
• several stowing rollers (14, 15) that can each move in rotation about a first axis Zi,
• several tape-springs (11, 12, 13, 31), each being capable of passing from a wound configuration in one of the stowing rollers (14, 15) to a deployed configuration along a second axis Xi substantially perpendicular to the first axis Zi of the associated stowing roller (14, 15) and having a substantially concave face and a substantially convex face, the concave faces of the tape-springs (11, 12, 13, 31) facing one another, the tape-springs (11, 12, 13, 31) being at least partially superposed in pairs over a contact surface (16),
• a reversible adherent link (17) on the contact surface (16) between at least two of the tape-springs (11, 12, 13, 31) in the deployed configuration,
**characterized in that** the contact surface (16) is positioned between the concave face of a first (11, 12, 13, 31) of the tape-springs (11, 12, 13, 31) and the convex face of a second (12, 11, 13, 31) of the tape-springs (11, 12, 13, 31).

2. Deployable device (10, 40, 50) according to claim 1, **characterized in that** the reversible adherent link (17) comprises protuberances (18) on one tape-spring (11, 12) and thread loops (19) on another tape-spring (12, 11).

3. Deployable device (10, 40, 50) according to claim 1, **characterized in that** the reversible adherent link (17) comprises a plurality of hairs (20) that adhere by means of Van der Waals forces, preferably setulae (20), and more preferably setulae (20) comprising spatulas(21) at their end.

4. Deployable device (10, 40, 50) according to one of the preceding claims, **characterized in that** the reversible adherent link (17) on the contact surface (16) is punctiform or linear.

5. Deployable device (10, 40, 50) according to one of the preceding claims, each of the plurality of tape-springs (11, 12) having a free end (22), **characterized in that** the free ends (22) of the plurality of tape-springs (11, 12) are linked rigidly together in the deployed configuration.

6. Deployable device (10, 40, 50) according to one of the preceding claims, each of the plurality of tape-springs (11, 12) having a free end (22), **characterized in that** at least one tape-spring (11, 12) of the plurality of tape-springs (11, 12) has a non-constant thickness along a third axis Yi substantially perpendicular to the second axis Xi and to the first axis Zi, preferably of decreasing thickness towards the free end (22), and/or a non-constant width along the first axis Zi, preferably of decreasing width towards the free end (22).

7. Deployable device (10, 40, 50) according to one of the preceding claims, **characterized in that** it comprises a rotation drive motor (23) configured to drive the plurality of stowing rollers (14, 15).

8. Deployable device (50) according to one of the preceding claims, **characterized in that** it comprises at least two rolls (24, 25) positioned as closely as possible to one of the stowing rollers (14, 15), the rolls (24, 25) being in contact with the tape-spring (11, 12) wound in said stowing roller (14, 15), and **in that** the rolls (24, 25) are capable of maintaining the tape-spring (11, 12) in the wound configuration on the one side of the rolls and in the deployed configuration on the other side of the rolls (24, 25).

9. Deployable device (50) according to one of the preceding claims, **characterized in that** it comprises an electric line (51) positioned on a surface of at least one tape-spring (11, 12) and/or on an additional roller co-wound in a stowing roller and/or on an ancillary roller.

10. Deployable device (50) according to one of the preceding claims, **characterized in that** the tape-springs (11, 12) at least partially superposed in pairs over the contact surface (16) form a hollow tube (52), and **in that** the deployable device (50) further comprises a cable (53), preferably an electrical or mechanical cable, positioned in the hollow tube (52).

11. Satellite (60) **characterized in that** it comprises at least one deployable device (10, 40, 50) according to one of the preceding claims.
